# EUROPEAN PATENT APPLICATION

(11) **EP 4 596 496 A1**
(43) Date of publication of application: **06.08.2025**
(21) Application number: 24843323.7
(22) Date of filing: 14.06.2024
(51) Int. Cl.: C01B 32/174, H01M 4/62

(54) **CARBON NANOTUBE DISPERSION AND PREPARATION METHOD THEREFOR**

(30) Priority: 17.07.2023 KR 20230092200; 13.06.2024 KR 20240077181
(71) Applicant: LG CHEM, LTD., Seoul 07336 (KR)
(72) Inventor: WOO, Yu Jin, Daejeon 34122 (KR); MOK, Yeongbong, Daejeon 34122 (KR); YANG, Youngjo, Daejeon 34122 (KR); JANG, Youngjin, Daejeon 34122 (KR); KIM, Hyunsuk, Daejeon 34122 (KR); YOON, Kiyoul, Daejeon 34122 (KR)
(74) Representative: Hoffmann Eitle
(86) International application number: PCT/KR2024/008243
(87) International publication number: WO 2025/018602

(57) **Abstract**

The present invention relates to a carbon nanotube dispersion comprising carbon nanotubes, a first dispersant containing a nitrogen atom, a second dispersant containing a substituted benzopyran-based compound and a solvent, wherein the substituted benzopyran-based compound comprised in the second dispersant contains at least three hydroxy groups, and a method for preparing the same.

## Description

### [Technical Field]

The present application claims the benefit of Korean Patent Application No. 10-2023-0092200 filed on July 17, 2023 and Korean Patent Application No. 10-2024-0077181 filed on June 13, 2024, all the contents of which are incorporated herein as part of the present application.

The present invention relates to a carbon nanotube dispersion and a preparation method thereof.

### [Background Art]

As technology development and demand for mobile devices are increased, demand for secondary batteries as an energy source is rapidly increasing. Among these secondary batteries, a lithium secondary battery with high energy density and voltage, long cycle life, and low self-discharge rate has been commercialized and is widely used. In addition, as an electrode for such a high-capacity lithium secondary battery, research is being actively conducted on methods to improve electrode density and manufacture electrodes with higher energy density per unit volume.

Generally, high-density electrodes are formed by molding particles of electrode active material with sizes ranging from several µm to tens of µm using a high-pressure press, and during the molding process, the particles are deformed and the space between the particles can be reduced, which is likely to reduce the permeability of the electrolyte solution.

In order to solve the above problems, electrically conductive materials with excellent electrical conductivity and strength are used when manufacturing electrodes. Even when the electrically conductive material is placed between electrode active materials and undergoes a molding process, the electrolyte solution can easily be penetrated by maintaining micropores between the particles of the active material, and the resistance within the electrode can be reduced due to excellent electrical conductivity. Among these electrically conductive materials, the use of carbon nanotubes, a fibrous carbon-based electrically conductive material that can further reduce the resistance of the electrode by forming an electrically conductive path within the electrode, is increasing.

Carbon nanotubes, a type of fine carbon fiber, is a tubular carbon fiber with a diameter of 1 µm or less, and has high conductivity, tensile strength, and heat resistance due to their specific structure, and thus is expected to be applied and commercialized in various fields. However, the carbon nanotubes have problems of low dispersibility and agglomeration phenomenon due to strong van der Waals attraction between them due to their high specific surface area.

In order to solve these problems, a method of dispersing carbon nanotubes in a dispersion medium through mechanical dispersion treatment such as sonication has been proposed. However, in the case of the mechanical dispersion treatment method, there is a problem that the carbon nanotubes either are agglomerated as soon as the ultrasonic irradiation ends, or they are agglomerated again over time after dispersion.

Therefore, there is a need to develop a method for producing carbon nanotube dispersion that can improve the dispersibility of carbon nanotubes, while having low viscosity and suppressing the increase in viscosity over time.

### [Prior Art Document]

### [Patent Document]

(Patent Document 1) Chinese Patent Publication No. 110128784 (2019.08.16)

### [Disclosure]

### [Technical Problem]

It is an object of the present invention to provide a carbon nanotube dispersion comprising carbon nanotubes, a first dispersant containing a nitrogen atom, a second dispersant containing a substituted benzopyran-based compound and a solvent, wherein the substituted benzopyran-based compound included in the second dispersant contains at least three hydroxy groups and thus has excellent dispersibility, so that the viscosity of the dispersion and the particle size of the dispersed particles are low, and the change in viscosity over time is small.

It is another object of the present invention to provide an electrode slurry composition for a lithium secondary battery, comprising a carbon nanotube dispersion.

It is still another object of the present invention to provide a method for preparing the carbon nanotube dispersion.

### [Technical Solution]

One embodiment of the present invention provides a carbon nanotube dispersion comprising carbon nanotubes, a first dispersant containing a nitrogen atom, a second dispersant containing a substituted benzopyran-based compound and a solvent, wherein the substituted benzopyran-based compound comprised in the second dispersant contains at least three hydroxy groups.

The second dispersant may comprise a compound represented by Formula 1 below: 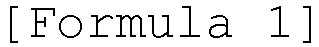 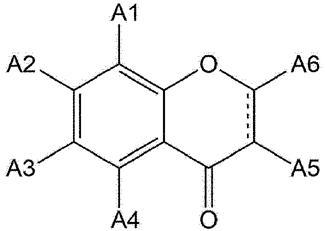 in Formula 1 above,
-̅-̅-̅-̅-̅-̅ is a single or double bond;
A1 to A6 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; substituted or unsubstituted C1 to C10 alkoxy group; a substituted or unsubstituted C3 to C10 cycloalkyl group; a substituted or unsubstituted C2 to C10 heterocycloalkyl group; or a substituent represented by Formula 2 below, wherein at least one of A1 to A6 is represented by Formula 2 below, 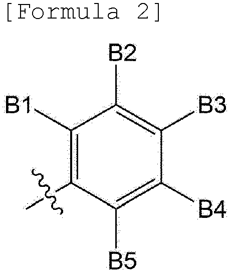 in Formula 2 above,
   B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; substituted or unsubstituted C1 to C10 alkoxy group; a substituted or unsubstituted C3 to C10 cycloalkyl group; or a substituted or unsubstituted C2 to C10 heterocycloalkyl group,
   wherein at least three of the substituents not represented by Formula 2 among A1 to A6 in Formula 1 and B1 to B5 in Formula 2 are hydroxy groups.

The second dispersant may comprise a compound represented by any one of Formulas 3 to 5 below: 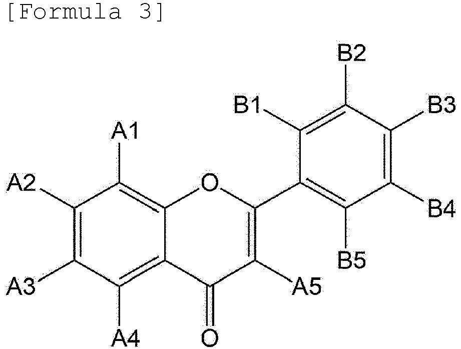 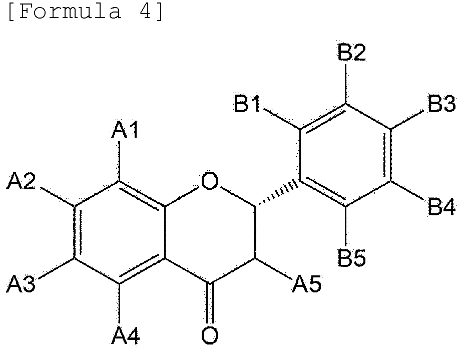 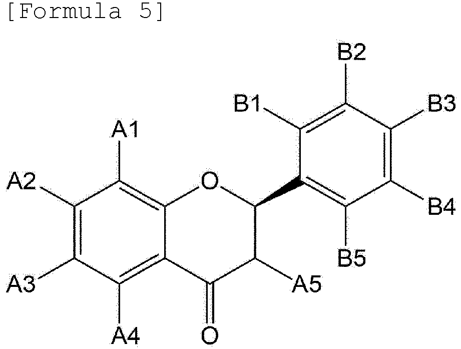 in Formulas 3 to 5 above,
A1 to A5 and B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; or a substituted or unsubstituted C2 to C10 heterocycloalkyl group,
wherein at least three of A1 to A5 and B1 to B5 in Formulas 3 to 5 are hydroxy groups.

The second dispersant may be at least one selected from the group consisting of luteolin, quercetin, kaempferol, myricetin, fisetin, morin, hesperetin, naringenin and eriodictyol.

The BET specific surface area of carbon nanotube may be 800 to 2,000 m²/g.

The carbon nanotube dispersion may contain the first dispersant in an amount of 25 parts by weight to 450 parts by weight based on 100 parts by weight of the carbon nanotubes.

The carbon nanotube dispersion may contain the second dispersant in an amount of 5 parts by weight to 250 parts by weight based on 100 parts by weight of the carbon nanotubes.

The first dispersant may be at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

The first dispersant and the second dispersant may be contained in a weight ratio of 100:10 to 100:90.

The carbon nanotube dispersion may have an initial viscosity of 1 to 10 Pa·s as measured at 25 °C and 1 rpm.

The carbon nanotube dispersion may have a viscosity increase rate of 15% or less, expressed by Equation 1 below. Viscosity increase rate(%) = {(viscosity measured after leaving at 25 °C for 1 week - initial viscosity)/initial viscosity} × 100

Another embodiment of the present invention provides a method for preparing a carbon nanotube dispersion comprising the steps of (1) mixing carbon nanotubes, a first dispersant containing a nitrogen atom, a second dispersant comprising a substituted benzopyran-based compound containing at least three or more hydroxy groups, and a solvent to prepare a primary dispersion of carbon nanotubes and (2) dispersing the primary dispersion of carbon nanotubes to prepare a secondary dispersion of carbon nanotubes.

Another embodiment of the present invention provides an electrode slurry composition for a lithium secondary battery, comprising the carbon nanotube dispersion and an electrode active material.

### [Advantageous Effects]

The carbon nanotube dispersion according to the present invention has a small change in viscosity over time, exhibits a relatively low viscosity, and has the characteristics of small particle size of the dispersed particles by uniformly and effectively dispersing the carbon nanotubes, by using a second dispersant comprising a substituted benzopyran-based compound containing at least three or more hydroxy groups, together with a first dispersant containing a nitrogen atom, despite using carbon nanotubes with a large specific surface area.

In addition, by using the carbon nanotube dispersion of the present invention in electrode slurry composition, an electrode and a secondary battery with excellent capacity characteristics and cycle characteristics can be manufactured.

### [Best Mode]

Hereinafter, embodiments of the present invention will be described in detail. Prior to this, the terms or words used in this specification and claims should not be construed as limited to their usual or dictionary meanings, and should be interpreted as meanings and concepts consistent with the technical idea of the present invention based on the principle that the inventor is able to appropriately define terminology to describe his invention in the best way possible. Therefore, since the configuration described in the embodiments of this specification is only one of the most preferred embodiments of the present invention and does not represent the entire technical idea of the present invention, it should be understood that at the time of filing this application, there may be various equivalents and modifications that can replace it.

As used herein, the term "substitution" means that a hydrogen atom bonded to a carbon atom of a compound is replaced with another substituent, and the position to be substituted is not limited as long as it is a position where a hydrogen atom is substituted, that is, a position where a substituent can be substituted, and when substituted by two or more substituents, the two or more substituents may be the same or different from each other.

As used herein, the term "substituted or unsubstituted" means that it is substituted or unsubstituted with one or more substituents selected from the group consisting of deuterium; a cyano group; a straight chain or branched C1 to C60 alkyl group; a straight or branched C2 to C60 alkenyl group; a straight chain or branched C2 to C60 alkynyl group; a monocyclic or polycyclic C3 to C60 cycloalkyl group; a monocyclic or polycyclic C2 to C60 heterocycloalkyl group; a monocyclic or polycyclic C6 to C60 aryl group; a monocyclic or polycyclic C2 to C60 heteroaryl group; -SiRR'R"; -P(=O)RR'; a C1 to C20 alkylamine group; a monocyclic or polycyclic C6 to C60 arylamine group; and a monocyclic or polycyclic C2 to C60 heteroarylamine group, or is substituted or unsubstituted with a substituent in which two or more substituents selected from the above-exemplified substituents are connected.

Throughout this specification, when a part is said to 'comprise' a certain component, this means that other components are not excluded and other components may be further included, unless specifically stated to the contrary.

Throughout this specification, "%" means% by weight, unless explicitly stated otherwise.

In this specification, the average particle size "D₅₀" means the particle size corresponding to 50% of the cumulative volume. The D₅₀ can be measured using, for example, a laser diffraction method. The laser diffraction method is generally capable of measuring particle sizes ranging from the submicron region to several millimeters and can obtain high reproducibility and high-resolution results.

In this specification, "specific surface area" is measured by the BET method (Brunauer-Emmett-Teller Analysis), and can be specifically calculated from the amount of nitrogen gas adsorption under liquid nitrogen temperature (77K) using BELSORP-mino II from BEL Japan company.

### Carbon nanotube dispersion

The carbon nanotube dispersion according to the present invention comprises carbon nanotubes, a first dispersant containing a nitrogen atom, a second dispersant comprising a substituted benzopyran-based compound containing at least three or more hydroxy groups, and a solvent. Hereinafter, each component of the carbon nanotube dispersion of the present invention will be described in detail.

### (1) Carbon nanotube

The term 'carbon nanotube' used in the present invention is a secondary structure formed by completely or partially gathering carbon nanotube units to become a bundle type, wherein the carbon nanotube unit has a graphite sheet in the shape of a cylinder with a nano-sized diameter and has an sp² bond structure. In this case, depending on the angle and structure at which the graphite surface is rolled, it can exhibit conductor or semiconductor characteristics. The carbon nanotube units can be classified into single-walled carbon nanotube (SWCNT), double-walled carbon nanotube (DWCNT) and multi-walled carbon nanotube (MWCNT) depending on the number of bonds forming the wall.

The term 'bundle type' used in the present invention, unless otherwise specified, refers to a secondary shape in the form of a bundle or rope in which a plurality of carbon nanotube units is arranged side by side with the longitudinal axes of the units substantially in the same orientation, or arranged and then twisted or entangled. 'Non-bundle type or entangled type' refers to a form in which the carbon nanotube units are entangled without a definite shape, such as a form of bundle or rope.

The carbon nanotubes have high conductivity, but have high agglomeration properties due to the van der Waals force that occurs between carbon nanotubes. If the electrically conductive material is agglomerated, the conductive path cannot be properly formed, and relatively more electrically conductive material is used, and thus the amount of active material is reduced and the performance of the electrode may actually be deteriorated. Therefore, there were difficulties in commercializing carbon nanotubes as an electrically conductive material.

Since the carbon nanotube dispersion according to the present invention comprises a second dispersant comprising a substituted benzopyran-based compound containing at least three or more hydroxy groups, together with a first dispersant containing a nitrogen atom, it can significantly reduce the initial viscosity of the carbon nanotube dispersion and suppress the occurrence of viscosity change over time, and thus when applied to the electrode slurry of a lithium secondary battery, high conductivity can be achieved due to the high conductivity of the carbon nanotube.

Therefore, when the carbon nanotube dispersion according to the present invention is applied to the manufacture of electrode slurry, since the carbon nanotubes are positioned uniformly between the active materials, the micro-space between electrode active materials can be maintained constant, even during manufacturing of the electrode by coating and drying the electrode slurry and then rolling it. In addition, since the carbon nanotubes are uniformly distributed without agglomeration, a conductive path can be sufficiently formed even with a small amount of carbon nanotubes.

The carbon nanotube dispersion according to an embodiment of the present invention may comprise, but is not limited to, any one or more of single-walled carbon nanotube, double-walled carbon nanotube and multi-walled carbon nanotube, and specifically may comprise single-walled carbon nanotube. Since the single-walled carbon nanotube or double-walled carbon nanotube has a higher specific surface area than the multi-walled carbon nanotube, it is more effective in improving cycle characteristics when applied to a secondary battery.

Meanwhile, the average diameter of the carbon nanotubes may be, for example, 0.6 to 10 nm, preferably 0.8 to 5 nm, more preferably 0.8 to 3 nm, and may be 0.8 nm or more, 0.9 nm or more, 1.0 nm or more, 1.1 nm or more, 1.2 nm or more, 1.3 nm or more, 1.4 nm or more, 1.5 nm or more, 1.6 nm or more, 1.7 nm or more, 1.8 nm or more or 1.9 nm or more and may be 3.0 nm or less, 2.9 nm or less, 2.8 nm or less, 2.7 nm or less, 2.6 nm or less, 2.5 nm or less, 2.4 nm or less, 2.3 nm or less, 2.2 nm or less, 2.1 nm or less or 2.0 nm or less.

In addition, the average length of the carbon nanotubes may be 0.5 to 20 µm, preferably 1 to 20 µm, more preferably 5 to 20 µm, and may be 5 µm or more, 7 µm or more, 9 µm or more, 11 µm or more or 13 µm or more, and may be 20 µm or less, 18 µm or less, 16 µm or less or 14 µm or less. If the average diameter and average length of the carbon nanotubes satisfy the above range, it is effective in reducing the viscosity of the dispersion and improving storage stability, and when applied to an electrode active material, excellent cycle characteristics can be achieved. In this case, the average diameter of the carbon nanotubes can be measured by photographing the carbon nanotube powder with a scanning electron microscope, and the average length of the carbon nanotubes can be measured by photographing the carbon nanotube dispersion with a scanning electron microscope.

The carbon nanotubes may be contained in an amount of 0.1 to 5% by weight, preferably 0.1 to 3% by weight, and more preferably 0.5 to 2% by weight, based on the total weight of the carbon nanotube dispersion, and may be contained in an amount of 0.1% by weight or more, 0.3% by weight or more, 0.5% by weight or more, 0.6% by weight or more, 0.7% by weight or more, 0.9% by weight or more, 1.0% by weight, 1.1% by weight or more or 1.3% by weight or more, and may be contained in an amount of 2% by weight or less, 1.8% by weight or less, 1.6% by weight or less or 1.4% by weight or less. If the content of the carbon nanotubes satisfies the above range, the effect of improving the viscosity of the dispersion and the effect of improving the cycle characteristics of the secondary battery are excellent.

The BET specific surface area of the carbon nanotubes may be 800 m²/g or more, preferably 800 m²/g to 5,000 m²/g, more preferably 800 m²/g to 2,000 m²/g, and may be 800 m²/g or more, 900 m²/g or more, 1,000 m²/g or more, 1,100 m²/g or more, 1,160 m²/g or more, 1,200 m²/g or more, 1,300 m²/g or more or 1,400 m²/g or more and may be 2,000 m²/g or less, 1,900 m²/g or less, 1,800 m²/g or less, 1,700 m²/g or less, 1,600 m²/g or less or 1,500 m²/g or less. When using carbon nanotubes with a high BET specific surface area as above, the formation of a conductive network between the electrode active materials is excellent, which has an effect of improving the cycle characteristics of the secondary battery.

The carbon nanotube dispersion according to an embodiment of the present invention can have a relatively high content of carbon nanotubes because the carbon nanotubes can be uniformly dispersed. If the carbon nanotube dispersion, which has a low content of carbon nanotubes, is used to manufacture an electrode slurry, since the solid content of the manufactured electrode slurry is decreased, the thickness (wet thickness) before applying and drying the electrode slurry is thick and afterwards, the rolling rate measured after drying and rolling treatments is increased and thus the difference in thickness ratio before and after drying and rolling is increased. As such, if the rolling rate is increased, the compositions inside the slurry, including the positive electrode active material, may be damaged during the process, and there may be a problem that reduces the performance of the battery accordingly.

### (2) First dispersant and second dispersant

The carbon nanotube dispersion according to the present invention comprises a second dispersant comprising a substituted benzopyran-based compound containing at least three or more hydroxy groups, together with a first dispersant containing a nitrogen atom, to improve the dispersibility of the carbon nanotubes.

Within the carbon nanotube dispersion, the first dispersant containing a nitrogen atom and the second dispersant comprising a substituted benzopyran-based compound containing at least three or more hydroxy groups act to increase the dispersibility of the carbon nanotubes so that the carbon nanotubes can be dispersed evenly without agglomerating within the dispersion, and specifically exhibit an effect of suppressing the change in viscosity of the carbon nanotube dispersion over time.

In carbon nanotube dispersion according to an embodiment of the present invention, the first dispersant containing a nitrogen atom may be soluble in an aqueous solvent to be described later, and for example may be at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine, and preferably may be polyvinylpyrrolidone. Since the carbon nanotube dispersion according to one embodiment of the present invention comprises the first dispersant containing a nitrogen atom, it can exhibit an effect of improving the viscosity of the dispersion and an effect of suppressing changes in viscosity over time.

In one embodiment of the present invention, the carbon nanotube dispersion, based on 100 parts by weight of the carbon nanotubes, may contain the first dispersant in an amount of 25 parts by weight to 450 parts by weight, and for example, may contain in an amount of 25 parts by weight or more, 30 parts by weight or more, 35 parts by weight or more, 40 parts by weight or more, 45 parts by weight or more, 50 parts by weight or more, 55 parts by weight or more, 60 parts by weight or more, 65 parts by weight or more, 70 parts by weight or more, 75 parts by weight or more, 80 parts by weight or more, 85 parts by weight or more, 90 parts by weight or more, 95 parts by weight or more, 100 parts by weight or more, 105 parts by weight or more, 110 parts by weight or more, 112.5 parts by weight or more, 115 parts by weight or more, 120 parts by weight or more, 125 parts by weight or more, 127.5 parts by weight or more or 130 parts by weight or more, and may contain in an amount of 450 parts by weight or less, 445 parts by weight or less, 440 parts by weight or less, 435 parts by weight or less, 430 parts by weight or less, 425 parts by weight or less, 420 parts by weight or less, 415 parts by weight or less, 410 parts by weight or less, 405 parts by weight or less, 400 parts by weight or less, 395 parts by weight or less, 390 parts by weight or less, 385 parts by weight or less, 380 parts by weight or less, 375 parts by weight or less, 370 parts by weight or less, 365 parts by weight or less, 360 parts by weight or less, 355 parts by weight or less, 350 parts by weight or less, 345 parts by weight or less, 340 parts by weight or less, 335 parts by weight or less, 330 parts by weight or less, 325 parts by weight or less, 320 parts by weight or less, 315 parts by weight or less, 310 parts by weight or less, 305 parts by weight or less, 300 parts by weight or less, 295 parts by weight or less, 290 parts by weight or less, 285 parts by weight or less, 280 parts by weight or less, 275 parts by weight or less, 270 parts by weight or less, 265 parts by weight or less, 260 parts by weight or less, 255 parts by weight or less, 250 parts by weight or less, 245 parts by weight or less, 240 parts by weight or less, 235 parts by weight or less, 230 parts by weight or less, 225 parts by weight or less, 220 parts by weight or less, 215 parts by weight or less, 210 parts by weight or less, 205 parts by weight or less, 200 parts by weight or less, 195 parts by weight or less, 190 parts by weight or less, 185 parts by weight or less, 180 parts by weight or less, 175 parts by weight or less, 170 parts by weight or less, 165 parts by weight or less, 160 parts by weight or less, 155 parts by weight or less, 150 parts by weight or less, 145 parts by weight or less, 140 parts by weight or less or 135 parts by weight or less.

If the content of the first dispersant is less than 25 parts by weight based on 100 parts by weight of carbon nanotubes, there may be a problem that sufficient dispersion effect is not achieved due to insufficient content of the dispersant, and thus the viscosity of the dispersion is not formed low and the viscosity is increased over time. If the content of the first dispersant exceeds 450 parts by weight, there may be a problem that since the content of the first dispersant is excessive, coagulation occurs between the solids within the dispersion, resulting in high viscosity of the dispersion.

In addition, the carbon nanotube dispersion according to an embodiment of the present invention comprises the second dispersant comprising a substituted benzopyran-based compound containing at least three or more hydroxy groups, together with the first dispersant, in order to solve the problem that for the carbon nanotube dispersion containing only the first dispersant, as the content of carbon nanotubes is increased, the viscosity of the dispersion is also increased, and accordingly, the carbon nanotube dispersion according to an embodiment of the present invention has excellent dispersibility compared to the carbon nanotube dispersion using only a conventional dispersant, thereby resulting the effect of less agglomeration of particles in the slurry composition and lower sedimentation speed.

As the substituted benzopyran-based compound comprised in the second dispersant contains at least three hydroxy groups, the molecular weight of the second dispersant is relatively low and the size of the molecule is small, allowing it to exhibit an additional dispersing effect by being adsorbed on the surface of the carbon nanotubes that are not covered by the first dispersant containing the nitrogen atom. In addition, in the case of the benzopyran structure contained in the second dispersant, pi-pi (π-π) interaction with the carbon nanotubes occurs stably in the local area, thereby ensuring sufficient bonding strength between the dispersant and the carbon nanotubes, and by reducing the content of remaining dispersants that are not effectively adsorbed on the surface of the carbon nanotubes, agglomeration of remaining dispersants can be prevented. In addition, at least three hydroxy groups contained in the substituted benzopyran-based compound comprised in the second dispersant form hydrogen bonds with the solvent in the dispersion, allowing the 'carbon nanotube-dispersant' combination to maintain a stable dispersion state in the solvent.

If the carbon nanotube dispersion does not comprise the second dispersant according to the present invention, the area where the surface of the carbon nanotube is not sufficiently covered by the dispersant may be increased, and as a result, a bonding force stronger than the appropriate level between carbon nanotubes occurs and agglomeration between carbon nanotubes occurs, and thus the viscosity of the dispersion can be formed to be high.

In addition, if the second dispersant contains, for example, three or more aromatic rings in the molecular structure, since the molecules become linearly angled or form a dense structure, small-diameter carbon nanotubes, especially single-walled carbon nanotubes, are disadvantageous for surface adsorption. In addition, since a strong pi-pi (π-π) interaction occurs between dispersants that are not adsorbed, thereby intensifying the agglomeration of the dispersant, the viscosity of the dispersion is formed to be high, and the viscosity of the dispersion may increase significantly as it changes over time.

In addition, if the substituted benzopyran-based compound comprised in the second dispersant contains more than 6 hydroxy groups, such as, tannic acid or epigallocatechin gallate (EGCG), there is a problem that when these are applied to carbon nanotube dispersion together with the first dispersant containing the nitrogen atom, very strong hydrogen bonds are formed between the dispersants, and thus hydrogels or insoluble combinations may be formed, which may cause the viscosity of the dispersion to become excessively high.

In order to effectively exhibit the above characteristics, substituted benzopyran-based compounds comprised in the second dispersant may be excluded if they contain three or more aromatic rings in the molecular structure or have a structure containing more than six hydroxy groups.

In one embodiment of the present invention, the second dispersant may comprise a compound represented by Formula 1 below. 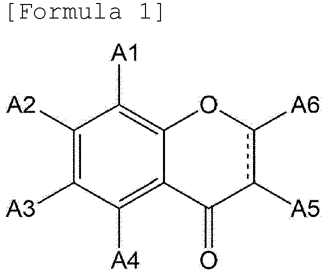 in Formula 1 above,
-̅-̅-̅-̅-̅-̅ is a single or double bond;
A1 to A6 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; a substituted or unsubstituted C2 to C10 heterocycloalkyl group; or a substituent represented by Formula 2 below, wherein at least one of A1 to A6 is represented by Formula 2 below, 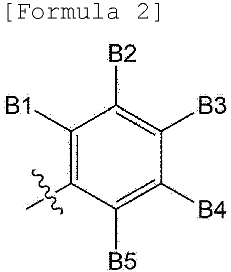 in Formula 2 above,
   B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; or a substituted or unsubstituted C2 to C10 heterocycloalkyl group,
   wherein at least three of the substituents not represented by Formula 2 among A1 to A6 in Formula 1 and B1 to B5 in Formula 2 are hydroxy groups.

As the second dispersant comprises a substituted benzopyran-based compound containing a benzopyran mother nucleus represented by Formula 1 and a benzene ring represented by Formula 2, and at least three of the substituents of the substituted benzopyran-based compound are replaced with hydroxy groups, pi-pi (π-π) interactions between the carbon nanotubes in the dispersion and the aromatic rings of the second dispersant and interactions through hydrogen bonding between the nitrogen atoms contained in the first dispersant and the hydroxyl group of the second dispersant are appropriately balanced, and thus the effect of decreasing the viscosity of the carbon nanotube dispersion and suppressing the increase in viscosity due to changes over time can be further improved.

In Formula 1, A1 to A6 are the same or different from each other and are each independently hydrogen; deuterium; halogen; a cyano group; a hydroxyl group; a carboxyl group; a substituted or unsubstituted C1 to C5 alkyl group; a substituted or unsubstituted C2 to C5 alkenyl group; a substituted or unsubstituted C2 to C5 alkynyl group; a substituted or unsubstituted C1 to C5 alkoxy group; a substituted or unsubstituted C3 to C5 cycloalkyl group; a substituted or unsubstituted C2 to C5 heterocycloalkyl group; or a substituent represented by Formula 2 above, wherein at least one of A1 to A6 is represented by Formula 2 above,

in Formula 2, B1 to B5 are the same or different from each other and are each independently hydrogen; deuterium; halogen; a cyano group; a hydroxyl group; a carboxyl group; a substituted or unsubstituted C1 to C5 alkyl group; a substituted or unsubstituted C2 to C5 alkenyl group; a substituted or unsubstituted C2 to C5 alkynyl group; a substituted or unsubstituted C1 to C5 alkoxy group; a substituted or unsubstituted C3 to C5 cycloalkyl group; or a substituted or unsubstituted C2 to C5 heterocycloalkyl group, wherein at least three of the substituents not represented by Formula 2 among A1 to A6 in Formula 1 and B1 to B5 in Formula 2 may be hydroxy groups.

In Formula 1, A1 to A6 are the same or different from each other and are each independently hydrogen; deuterium; a hydroxyl group; a substituted or unsubstituted C1 to C5 alkoxy group; or a substituent represented by Formula 2 above, wherein at least one of A1 to A6 is represented by Formula 2 above.

In Formula 2, B1 to B5 are the same or different from each other and are each independently hydrogen; deuterium; a hydroxyl group; or a substituted or unsubstituted C1 to C5 alkoxy group, provided that at least three of the substituents not represented by Formula 2 among A1 to A6 in Formula 1 and B1 to B5 in Formula 2 may be hydroxy groups.

In Formula 1, at least two of A1 to A6 may be hydroxy groups.

In Formula 2, at least one of B1 to B5 may be a hydroxy group.

In one embodiment of the present invention, the second dispersant may comprise a compound represented by any one of Formulas 3 to 5 below: 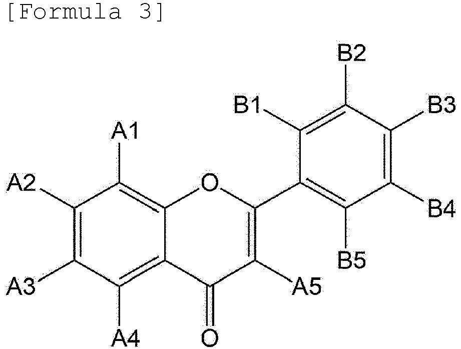 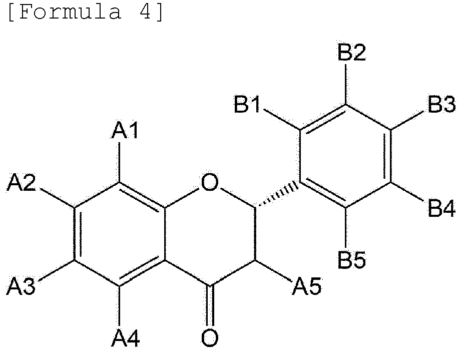 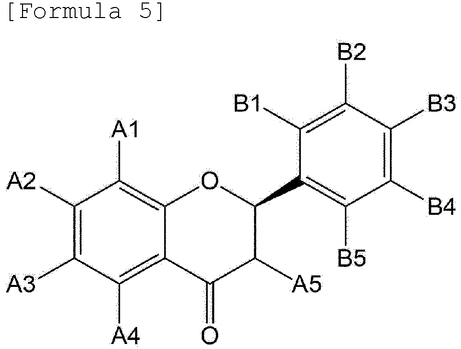 in Formulas 3 to 5 above,
A1 to A5 and B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; or a substituted or unsubstituted C2 to C10 heterocycloalkyl group,
wherein at least three of A1 to A5 and B1 to B5 in Formulas 3 to 5 are hydroxy groups.

In Formulas 3 to 5, A1 to A5 and B1 to B5 are the same or different from each other and are each independently hydrogen; deuterium; halogen; a cyano group; a hydroxyl group; a carboxyl group; a substituted or unsubstituted C1 to C5 alkyl group; a substituted or unsubstituted C2 to C5 alkenyl group; a substituted or unsubstituted C2 to C5 alkynyl group; a substituted or unsubstituted C1 to C5 alkoxy group; a substituted or unsubstituted C3 to C5 cycloalkyl group; or a substituted or unsubstituted C2 to C5 heterocycloalkyl group, wherein at least three of A1 to A5 and B1 to B5 in Formulas 3 to 5 are hydroxy groups.

In Formulas 3 to 5, A1 to A5 and B1 to B5 are the same or different from each other and are each independently hydrogen; deuterium; a hydroxyl group; or a substituted or unsubstituted C1 to C5 alkoxy group, wherein at least three of A1 to A5 and B1 to B5 in Formulas 3 to 5 may be hydroxy groups.

In Formulas 3 to 5, at least two of A1 to A5 may be hydroxy groups, and at least one of B1 to B5 may be a hydroxy group.

In one embodiment of the present invention, specific examples of the second dispersant may be at least one selected from the group consisting of luteolin, quercetin, kaempferol, myricetin, fisetin, morin, hesperetin, naringenin and eriodictyol, as shown in Table 1, and a specific example of the second dispersant is a substituted benzopyran-based compound and may not be limited to the above type as long as it contains at least three hydroxy groups in the molecule and can improve the dispersibility of carbon nanotubes.

**[Table 1]**

| Type of second dispersant | |
|---|---|
| luteolin | 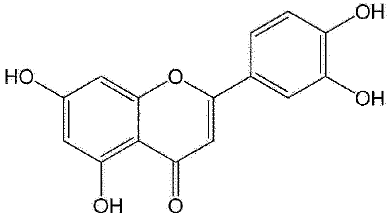 |
| quercetin | 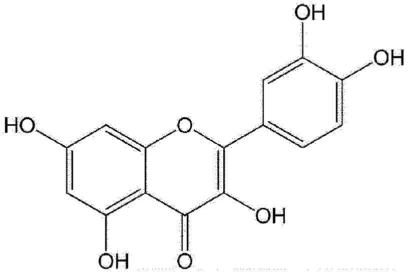 |
| kaempferol | 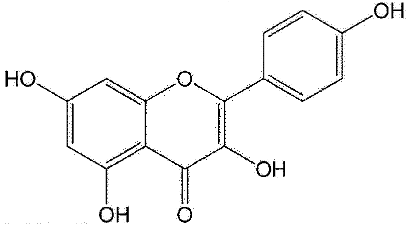 |
| myricetin | 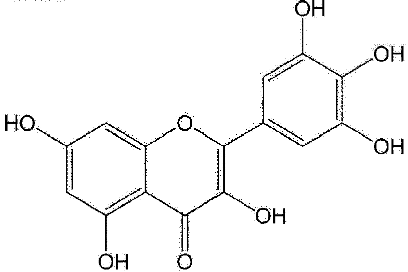 |
| fisetin | 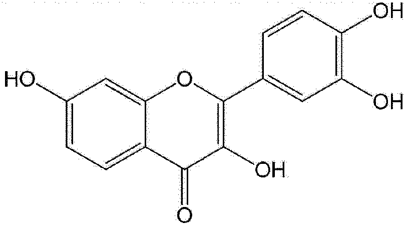 |
| morin | 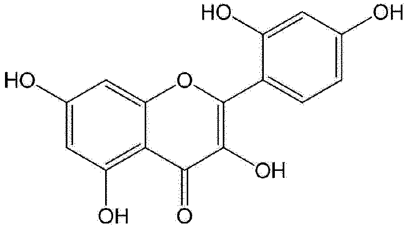 |
| hesperetin | 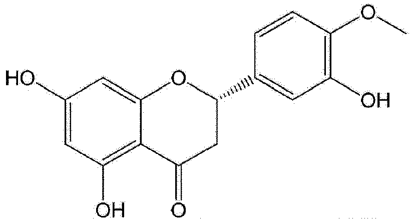 |
| naringenin | 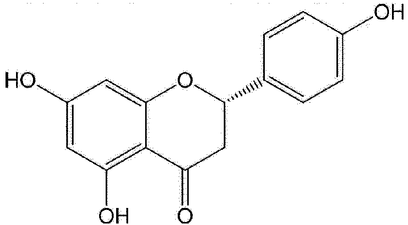 |
| eriodictyol | 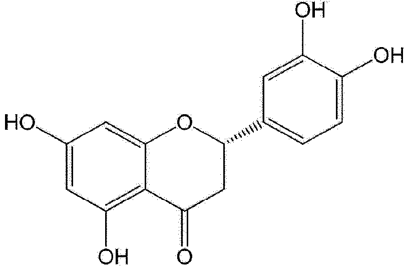 |

In one embodiment of the present invention, the carbon nanotube dispersion may contain the second dispersant in an amount of 5 parts by weight to 250 parts by weight, based on 100 parts by weight of the carbon nanotubes, and for example, may contain in an amount of 5 parts by weight or more, 10 parts by weight or more, 15 parts by weight or more, 20 parts by weight or more, 22.5 parts by weight or more, 25 parts by weight or more, 30 parts by weight or more, 35 parts by weight or more, 37.5 parts by weight or more, 40 parts by weight or more, 45 parts by weight or more, 50 parts by weight or more, 55 parts by weight or more or 60 parts by weight or more and may contain in an amount of 250 parts by weight or less, 245 parts by weight or less, 240 parts by weight or less, 235 parts by weight or less, 230 parts by weight or less, 225 parts by weight or less, 220 parts by weight or less, 215 parts by weight or less, 210 parts by weight or less, 205 parts by weight or less, 200 parts by weight or less, 195 parts by weight or less, 190 parts by weight or less, 185 parts by weight or less, 180 parts by weight or less, 175 parts by weight or less, 170 parts by weight or less, 165 parts by weight or less, 160 parts by weight or less, 155 parts by weight or less, 150 parts by weight or less, 145 parts by weight or less, 140 parts by weight or less, 135 parts by weight or less, 130 parts by weight or less, 125 parts by weight or less, 120 parts by weight or less, 115 parts by weight or less, 110 parts by weight or less, 105 parts by weight or less, 100 parts by weight or less, 95 parts by weight or less, 90 parts by weight or less, 85 parts by weight or less, 80 parts by weight or less, 75 parts by weight or less, 70 parts by weight or less or 65 parts by weight or less.

If the content of the second dispersant is less than 5 parts by weight based on 100 parts by weight of carbon nanotubes, there may be problems that since the first dispersant and the second dispersant do not form sufficient hydrogen bonds and thus do not produce an effective dispersion effect, the viscosity of the dispersion may not be low and the viscosity is increased over time. If the content of the second dispersant exceeds 250 parts by weight, since the content of the second dispersant is excessive, there may be a problem that agglomeration between solids within the dispersion is progressed, resulting in high viscosity of the dispersion.

In one embodiment of the present invention, the first dispersant and the second dispersant in the carbon nanotube dispersion may be contained in a weight ratio of 100:10 to 100:90, and for example, the first dispersant and the second dispersant may be contained in a weight ratio of 100:10 or more, 100:15 or more, 100:17.65 or more, 100:20 or more, 100:25 or more, 100:30 or more, 100:33.33 or more, 100:35 or more, 100:40 or more, 100:45 or more, 100:50 or more or 100:55 or more and the first dispersant and the second dispersantmay be contained in a weight ratio of 100:90 or less, 100:85 or less, 100:80 or less, 100:75 or less, 100:70 or less, 100:65 or less or 100:60 or less.

If the contents of the first dispersant and the second dispersant are in the carbon nanotube dispersion at the above weight ratio, since the carbon nanotubes are uniformly dispersed within the carbon nanotube dispersion, the viscosity can be maintained at a constant level over time along with low viscosity.

### (3) Solvent

The solvent for the carbon nanotubes dispersion according to an embodiment of the present invention is a dispersion medium for dispersing the carbon nanotubes, the first dispersant, the second dispersant, and is used to pre-disperse the carbon nanotubes in the powdered state to prevent them from agglomerating and supply them to the carbon nanotube dispersion when using them directly in the production of the electrode slurry composition.

The solvent is capable of dissolving or dispersing the carbon nanotubes, the first dispersant, and the second dispersant above a certain level. The aqueous solvent may be, for example, water, and the aqueous solvent may be contained in an amount that allows the electrode slurry composition to have an appropriate viscosity, taking into account the coating properties, etc. of the electrode slurry composition manufactured using the carbon nanotube dispersion.

In the case of the carbon nanotube dispersion according to an embodiment of the present invention, since the first dispersant and the second dispersant allow the carbon nanotubes to be uniformly dispersed in the solvent as described above, it is possible to reduce the average particle size distribution of dispersed particles contained in the dispersion, such as complex of carbon nanotubes and each dispersant.

The average particle size distribution (D₅₀) of the dispersed particles contained in the dispersion may be, for example, 0.5 to 10 µm, 1 to 10 µm, 1 to 8 µm, preferably 1 to 5 µm .

The carbon nanotube dispersion of the present invention containing the components as described above has excellent dispersibility, low viscosity, and a small increase in viscosity over time.

The carbon nanotube dispersion may have an initial viscosity of 1 to 10 Pa.s, measured at 25 °C and 1 rpm using a viscometer (viscometer TV-25, Rotor Code 01, manufactured by TOKISANGYO), and for example, may have an initial viscosity of 1 Pa.s or more, 2 Pa.s or more, 2.5 Pa.s or more, 3 Pa.s or more, 4 Pa.s or more or 5 Pa.s or more, and may have an initial viscosity of 10 Pa.s or less, 9.8 Pa.s or less, 9.5 Pa.s or less, 9 Pa.s or less, 8.5 Pa.s or less, 8 Pa.s or less, 7.5 Pa.s or less, 7 Pa.s or less, 6.5 Pa.s or less or 6 Pa.s or less. If the carbon nanotube dispersion has an initial viscosity in the above range, an electrode slurry can be manufactured more smoothly using this, and an electrode slurry containing the carbon nanotube dispersion can have an appropriate viscosity for forming an electrode.

In addition, when the carbon nanotube dispersion is left at 25 °C for 1 week, the viscosity increase rate calculated by Equation (1) below may be 15% or less, specifically 15% or less, 14.5 % or less, 14 % or less, 13.5 % or less, 13 % or less, 12.5 % or less, 12 % or less, 11.5 % or less, 11 % or less, 10.5 % or less, 10 % or less, 9.5 % or less, 9 % or less, 8.5 % or less, 8 % or less, 7.5 % or less, 7 % or less, 6.5 % or less, 6.1 % or less, 6 % or less, 5.5 % or less, 5 % or less, 4.5 % or less, 4 % or less, 3.5 % or less, 3 % or less, 2.5 % or less, 2.4 % or less, 2 % or less, 1.5 % or less or 1 % or less. Viscosity increase rate(%) = {(viscosity measured after leaving at 25°C for 1 week - initial viscosity)/initial viscosity} × 100

In this case, the viscosity after leaving for one week and initial viscosity were measured at 25 °C and 1 rpm.

### Preparation method of carbon nanotube dispersion

Hereinafter, the preparation method of the carbon nanotube dispersion will be described.

The preparation method of the electrically conductive material dispersion according to the present invention comprises the steps of (1) mixing carbon nanotubes, a first dispersant containing a nitrogen atom, a second dispersant comprising a substituted benzopyran-based compound containing at least three or more hydroxy groups, and a solvent to prepare a primary dispersion of carbon nanotubes; and (2) dispersing the primary dispersion of carbon nanotubes to prepare a secondary dispersion of carbon nanotubes.

In step (1), by mixing carbon nanotubes, a first dispersant containing a nitrogen atom, a second dispersant comprising a substituted benzopyran-based compound containing at least three or more hydroxy groups, and a solvent, a primary dispersion of carbon nanotubes is prepared. The step of preparing the primary dispersion of carbon nanotubes is carried out as a wet process in which each component is evenly mixed.

The mixing to produce the primary dispersion of carbon nanotubes can be performed by conventional mixing methods, specifically using mixing devices such as a Pony mixer, a Change-can mixer, a Hobert mixer, a planetary mixer, a butterfly mixer, a stone mill, a homogenizer, a bead mill, a ball mill, a basket mill, an attrition mill, an universal agitator, a clear mixer or a TK mixer, etc., and may comprise a step of mixing for 30 minutes to 7 hours at rotational speeds of 300 to 5,000 rpm.

In addition, when mixing to produce the primary dispersion of carbon nanotubes, cavitation dispersion treatment may be also performed to increase the miscibility of carbon nanotubes with the solvent or the dispersibility of the carbon nanotubes in the solvent. The cavitation dispersion treatment is a dispersion treatment method using shock waves generated by the rupture of vacuum bubbles formed in water when high energy is applied to the liquid. By the above method, carbon nanotubes can be dispersed without damaging their properties. Specifically, the cavitation dispersion treatment may be performed by ultrasonic waves, a jet mill, or shear dispersion treatment.

The preparation step of the primary dispersion of carbon nanotubes can be performed under temperature conditions in which the physical properties, including viscosity, of the mixture do not change due to evaporation of the aqueous solvent. For example, it may be performed at a temperature of 50 °C or less, more specifically, 5 °C to 50 °C.

In the preparation method of the carbon nanotube dispersion, since the detailed description of carbon nanotubes, the first dispersant containing a nitrogen atom, the second dispersant comprising a substituted benzopyran-based compound containing at least 3 or more hydroxy groups and the solvent is the same as described above, detailed description will be omitted below.

In step (2), by dispersing the primary dispersion of carbon nanotubes, a secondary dispersion of carbon nanotubes is prepared.

The stirring process can be performed by a method using a ball mill, a bead mill, a disc mill or a basket mill, a high-pressure homogenizer, etc. More specifically, it can be performed by a milling method using a disc mill or a high-pressure homogenizer.

When milling by the disc mill, the size of the bead can be appropriately determined depending on the type and amount of carbon nanotubes and the type of dispersant. Specifically, the diameter of the bead may be 0.1 mm to 5 mm, and more specifically, 0.5 mm to 4 mm. Additionally, the bead milling process may be performed at a speed of 2,000 rpm to 10,000 rpm, and more specifically, may be performed at a speed of 5,000 rpm to 9,000 rpm.

The milling by the high-pressure homogenizer, for example, pressurizes the mixture with a plunger pump of the high-pressure homogenizer and pushes it through the gap of the homogenization valve, and thus is achieved by forces such as cavitation, shear, impact and explosion when passing through the gap.

The dispersion process may be performed depending on the degree of dispersion of the carbon nanotube dispersion, and specifically can be performed under a pressure of 5,000 to 30,000 psi for 30 minutes to 120 minutes, more specifically 60 minutes to 90 minutes, and the process can be repeated 1 to 10 times.

The carbon nanotube dispersion according to the present invention may mean the secondary dispersion of carbon nanotubes.

### Electrode slurry composition for lithium secondary battery

In addition, the present invention provides an electrode slurry composition for a lithium secondary battery, comprising the carbon nanotube dispersion and an electrode active material.

The electrode slurry composition for the lithium secondary battery may be a positive electrode slurry composition or a negative electrode slurry composition, and may specifically be a negative electrode slurry composition.

The electrode slurry composition for the lithium secondary battery may comprise the carbon nanotube dispersion, a positive electrode active material or negative electrode active material as an electrode active material, a binder, and, if necessary, a solvent and/or other additives.

As the positive electrode active material, positive electrode active materials well known in the art can be used without limitation, and for example, lithium cobalt-based oxide, lithium nickel-based oxide, lithium manganese-based oxide, lithium iron phosphate, lithium nickel manganese cobalt-based oxide, or a combination thereof may be used. Specifically, as the positive electrode active material, LiCoO₂, LiNiO₂, LiMn₂O₄, LiCoPO₄, LiFePO₄, LiNiaMnbCocO₂ (wherein, 0 < a, b, c < 1) and the like may be used, but is not limited thereto.

The negative electrode active material may include one or two or more negative electrode active materials selected from the group consisting of natural graphite, artificial graphite, carbonaceous material; lithium-containing titanium composite oxide (LTO), metals (Me) which are Si, Sn, Li, Zn, Mg, Cd, Ce, Ni or Fe; alloys composed of the above-described metals (Me); oxides of the above-described metals (Me) (MeOₓ); and a composite of the above-described metals (Me) and carbon. The negative electrode active material may be contained in an amount of 60 to 98% by weight, more preferably 70 to 98% by weight, based on the total weight of solids excluding solvent in the negative electrode slurry.

The binder is a component that assists in the bonding between the active material and the electrically conductive material, etc. and the bonding to a current collector, and is typically added in an amount of 1 to 30% by weight based on the total weight of the mixture containing the electrode active material. Examples of such binders may comprise polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, various copolymers and the like.

The solvent may be organic solvents such as N-methyl pyrrolidone (NMP), dimethyl formamide (DMF), acetone, and dimethyl acetamide, or water, and these solvents can be used alone or in a mixture of two or more types. The amount of solvent used is sufficient as long as it can dissolve and disperse the electrode active material, the binder, and the electrically conductive material, considering the thickness of the slurry application and a preparation yield.

The viscosity adjusting agent may be carboxymethylcellulose, polyacrylic acid, etc., and by adding it, the viscosity of the electrode slurry can be adjusted to facilitate the preparation of the electrode slurry and the application process on the electrode current collector.

The filler is selectively used as a component to suppress expansion of the electrode, and is not particularly limited as long as it is a fibrous material that does not cause chemical changes in the battery, and for example, comprises olefinic polymerizer such as polyethylene and polypropylene; a fibrous material such as glass fiber or carbon fiber.

If the electrode slurry composition is a positive electrode slurry composition for forming a positive electrode, the positive electrode can be manufactured by applying the positive electrode slurry composition on a positive electrode current collector and then drying and rolling it. Alternatively, it can also be manufactured by casting the positive electrode slurry on a separate support and then laminating the film obtained by peeling from the support on the positive electrode current collector.

The thickness of the positive electrode active material layer formed by the positive electrode slurry may vary depending on the loading amount, loading speed and the like for applying the positive electrode slurry.

The positive electrode current collector generally has a thickness of 3 µm to 500 µm. This positive electrode current collector is not particularly limited as long as it has high conductivity without causing chemical changes in the battery. For example, stainless steel, aluminum, nickel, titanium, calcined carbon, or aluminum or stainless steel whose surface has been treated with carbon, nickel, titanium, silver, etc. can be used. In addition, by forming fine irregularities on the surface of the positive electrode current collector, the bonding strength of the positive electrode active material can be strengthened, and it can be used in various forms such as films, sheets, foils, nets, porous bodies, foams, and nonwoven fabrics.

If the electrode slurry composition is a composition of negative electrode slurry to form a negative electrode, the negative electrode can be manufactured by applying the negative electrode slurry composition on a negative electrode current collector and then drying and rolling it. In addition, it can also be manufactured by casting the negative electrode slurry on a separate support and then laminating the film obtained by peeling from the support on the negative electrode current collector.

The thickness of the negative electrode active material layer formed by the negative electrode slurry may vary depending on the loading amount, loading speed and the like for applying the negative electrode slurry.

The negative electrode current collector generally has a thickness of 3 µm to 500 µm. This negative electrode current collector is not particularly limited as long as it has high conductivity without causing chemical changes in the battery. For example, copper, stainless steel, aluminum, nickel, titanium, calcined carbon, or copper or stainless steel whose surface has been treated with carbon, nickel, titanium, silver, etc. or aluminum-cadmium alloy can be used. In addition, as with the negative electrode current collector, by forming fine irregularities on the surface, the bonding strength of the negative electrode active material can be strengthened, and it can be used in various forms such as films, sheets, nets, foils, porous bodies, foams, and non-woven fabrics.

### Lithium secondary battery

The lithium secondary battery comprises a positive electrode, a negative electrode, a separator disposed between the positive electrode and the negative electrode, and an electrolyte solution. Since the positive electrode and negative electrode are the same as described above, detailed description is omitted.

The separator separates the negative electrode and the positive electrode and provides a passage for lithium ions to move. The separator can be used without any particular limitation as long as it is usually used as a separator in a lithium secondary battery. As the separator, it is particularly preferable to have low resistance to ion movement of the electrolyte and excellent electrolyte solution impregnation ability. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used. In addition, a conventional porous nonwoven fabric, for example, a nonwoven fabric made of high melting point glass fiber, polyethylene terephthalate fiber, etc. may also be used. In addition, a coated separator containing a ceramic component or a polymer material may be used to secure heat resistance or mechanical strength, and the separator may be selectively used in a single-layer or multi-layer structure.

The electrolyte comprises, but is not limited to, an organic liquid electrolyte, an inorganic liquid electrolyte, a solid polymer electrolyte, a gel-type polymer electrolyte, a solid inorganic electrolyte, and a molten inorganic electrolyte, which can be used in the manufacture of a lithium secondary battery. Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be an esterbased solvent such as methyl acetate, ethyl acetate, γ-butyrolactone, or ε-caprolactone; an ether-based solvents such as dibutyl ether or tetrahydrofuran; a ketone-based solvent such as cyclohexanone; an aromatic hydrocarbon-based solvent such as benzene, or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), propylene carbonate (PC); an alcoholbased solvent such as ethyl alcohol or isopropyl alcohol; nitriles such as R-CN(R is a C2 to C20 linear, branched or cyclic hydrocarbon group, and may include a double bond aromatic ring or an ether bond); amides such as dimethylformamide; dioxolanes such as 1,3-dioxolane; or sulfolane. Among them, the carbonate-based solvent is preferable, and a mixture of the cyclic carbonate having high ionic conductivity and high dielectric constant that can increase the charge/discharge performance of the battery (e.g., ethylene carbonate or propylene carbonate, etc.) and the linear carbonate-based compound having a low viscosity (e.g., ethylmethyl carbonate, dimethyl carbonate or diethyl carbonate, etc.) is more preferred. In this case, when the cyclic carbonate and the chain carbonate are mixed in a volume ratio of about 1:1 to about 1:9, the performance of the electrolyte solution may be excellent.

The lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂, etc. The concentration of the lithium salt is preferably used within the range of 0.1M to 2.0M. If the concentration of the lithium salt is in the above range, since the electrolyte has appropriate conductivity and viscosity, excellent electrolyte performance can be exhibited, and lithium ions can move effectively.

In the electrolyte, in addition to the electrolyte components described above, for the purpose of improving the lifetime characteristics of the battery, suppressing the decrease in the capacity of the battery, and improving the discharging capacity of the battery, for example, one or more additives such as haloalkylene carbonate-based compounds such as difluoroethylene carbonate, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be further comprised. In this case, the additive may be contained in an amount of 0.1% by weight to 5% by weight based on the total weight of the electrolyte.

The lithium secondary battery including the electrode manufactured using the carbon nanotube dispersion according to the present invention, specifically, the lithium secondary battery containing the negative electrode manufactured using the carbon nanotube dispersion has carbon nanotubes evenly distributed within the negative electrode, and its content can be reduced compared to conventional electrically conductive materials such as carbon black, and thus it can stably exhibit excellent discharge capacity and output characteristics. As a result, it can be usefully used in portable devices such as mobile phones, laptop computers, digital cameras, and electric vehicles such as hybrid electric vehicles (HEV).

Accordingly, according to another embodiment of the present invention, the present invention provides a battery module comprising the lithium secondary battery as a unit cell and a battery pack comprising the same.

The battery module or battery pack may be used as a power source for any one or more medium- and large-sized devices of a power tool; an electric vehicle comprising an electric vehicle (EV), a hybrid electric vehicle, and a plug-in hybrid electric vehicle (PHEV); or a power storage system, etc.

Hereinafter, specific examples of the present invention are presented. However, the examples described below are only for illustrating or explaining the present invention in detail, and do not limit the present invention. In addition, since content not described herein can be sufficiently inferred technically by a person skilled in the art, its description is omitted.

### Example

### Example 1

(1) 5.625 g (1.125% by weight with respect to a total of 100 parts by weight of the carbon nanotube dispersion) of polyvinylpyrrolidone (PVP, prepared by Zhangzhou Huafu Chemical company) as the first dispersant containing nitrogen atoms, 1.875 g (0.375% by weight with respect to a total of 100 parts by weight of the carbon nanotube dispersion) of luteolin (prepared by INDOFINE Chemical company) which is the second dispersant comprising a substituted benzopyran-based compound containing at least three or more hydroxy groups, and 487.5 g of water as the solvent were mixed to prepare 495 g of mixed solution, and the obtained mixed solution was put into a dissolving tank equipped with an impeller and a container (dissolver, Dispermat-CA, manufactured by VMA-GETZMANN company) and stirred and mixed at 400 rpm for 10 minutes.
(2) To the above mixture, 5.0 g (1.0% by weight with respect to a total of 100 parts by weight of the carbon nanotube dispersion) of single-walled carbon nanotubes (SWCNT, TUBALL, prepared by OCSiAl company) with a specific surface area of 1,160 m²/g and an average particle size (D₅₀) of 5 µm was additional added, and stirred at 8,000 rpm for 60 minutes to produce a total of 500 g of a primary dispersion of carbon nanotubes.
(3) The primary dispersion of carbon nanotubes was homogeneously dispersed seven times at a pressure of 20,000 psi using a high-pressure disperser (PICOMAX, manufactured by Micronox company) to prepare a secondary dispersion of carbon nanotubes.

### Example 2

A carbon nanotube dispersion was prepared in the same manner as Example 1 above, except that in Example 1 above, the content of the first dispersant is set to 1.000% by weight with respect to a total of 100 parts by weight of the carbon nanotube dispersion, and the content of the second dispersant is set to 0.5% by weight with respect to a total of 100 parts by weight of the carbon nanotube dispersion.

### Example 3

A carbon nanotube dispersion was prepared in the same manner as Example 1 above, except that in Example 1 above, the content of the carbon nanotubes is set to 0.6% by weight with respect to a total of 100 parts by weight of the carbon nanotube dispersion, the content of the first dispersant is set to 0.675% by weight with respect to a total of 100 parts by weight of the carbon nanotube dispersion, and the content of the second dispersant is set to 0.225% by weight with respect to a total of 100 parts by weight of the carbon nanotube dispersion.

### Example 4

A carbon nanotube dispersion was prepared in the same manner as Example 1 above, except that in Example 1 above, the content of the second dispersant is set to 0.113% by weight with respect to a total of 100 parts by weight of the carbon nanotube dispersion.

### Example 5

A carbon nanotube dispersion was prepared in the same manner as Example 1 above, except that in Example 1 above, the content of the first dispersant is set to 2.500% by weight with respect to a total of 100 parts by weight of the carbon nanotube dispersion, and the content of the second dispersant is set to 2.250% by weight with respect to a total of 100 parts by weight of the carbon nanotube dispersion.

### Example 6

A carbon nanotube dispersion was prepared in the same manner as Example 1 above, except that in Example 1 above, 1.875 g (0.375% by weight with respect to a total of 100 parts by weight of carbon nanotube dispersion) of quercetin (prepared by INDOFINE Chemical company) is used instead of luteolin as the second dispersant comprising a substituted benzopyran-based compound containing at least three hydroxy groups.

### Example 7

A carbon nanotube dispersion was prepared in the same manner as Example 1 above, except that in Example 1 above, 1.875 g (0.375% by weight with respect to a total of 100 parts by weight of carbon nanotube dispersion) of myricetin (prepared by INDOFINE Chemical company) is used instead of luteolin as the second dispersant comprising a substituted benzopyran-based compound containing at least three hydroxy groups.

### Comparative Example 1

A carbon nanotube dispersion was prepared in the same manner as Example 1 above, except that in Example 1 above, the second dispersant is not added.

### Comparative Example 2

A carbon nanotube dispersion was prepared in the same manner as Example 1 above, except that in Example 1 above, the content of the carbon nanotubes is set to 0.6% by weight with respect to a total of 100 parts by weight of the carbon nanotube dispersion, and the content of the first dispersant is set to 0.900% by weight with respect to a total of 100 parts by weight of the carbon nanotube dispersion, but the second dispersant is not added.

### Comparative Example 3

A carbon nanotube dispersion was prepared in the same manner as Example 1 above, except that in Example 1 above, the content of the second dispersant is set to 1.500% by weight with respect to a total of 100 parts by weight of the carbon nanotube dispersion, but the first dispersant is not added.

### Comparative Example 4

A carbon nanotube dispersion was prepared in the same manner as Example 1 above, except that in Example 1 above, the content of the carbon nanotubes is set to 0.6% by weight with respect to a total of 100 parts by weight of the carbon nanotube dispersion, the content of the first dispersant is set to 0.675% by weight with respect to a total of 100 parts by weight of the carbon nanotube dispersion, and the content of the second dispersant as tristyrylphenol ethoxylate instead of luteolin is set to 0.225% by weight with respect to a total of 100 parts by weight of the carbon nanotube dispersion.

### Comparative Example 5

A carbon nanotube dispersion was prepared in the same manner as Example 1 above, except that in Example 1 above, the content of the carbon nanotubes is set to 0.6% by weight with respect to a total of 100 parts by weight of the carbon nanotube dispersion, the content of the first dispersant is set to 0.675% by weight with respect to a total of 100 parts by weight of the carbon nanotube dispersion, and the content of the second dispersant as a styrene maleic acid copolymer instead of luteolin is set to 0.225% by weight with respect to a total of 100 parts by weight of the carbon nanotube dispersion.

### Comparative Example 6

A carbon nanotube dispersion was prepared in the same manner as Example 1 above, except that in Example 1 above, instead of luteolin as the second dispersant, tannic acid is added in an amount of 0.375% by weight with respect to a total of 100 parts by weight of the carbon nanotube dispersion.

### Comparative Example 7

A carbon nanotube dispersion was prepared in the same manner as Example 1 above, except that in Example 1 above, instead of luteolin as the second dispersant, epigallocatechin gallate is added in an amount of 0.375% by weight with respect to a total of 100 parts by weight of the carbon nanotube dispersion.

### Comparative Example 8

A carbon nanotube dispersion was prepared in the same manner as Example 1 above, except that in Example 1 above, the content of the first dispersant is set to 0.250% by weight with respect to a total of 100 parts by weight of the carbon nanotube dispersion, and the content of the second dispersant is set to 0.025% by weight with respect to a total of 100 parts by weight of the carbon nanotube dispersion.

### Comparative Example 9

A carbon nanotube dispersion was prepared in the same manner as Example 1 above, except that in Example 1 above, the content of the first dispersant is set to 3.056% by weight with respect to a total of 100 parts by weight of the carbon nanotube dispersion, and the content of the second dispersant is set to 2.750% by weight with respect to a total of 100 parts by weight of the carbon nanotube dispersion.

### Comparative Example 10

A carbon nanotube dispersion was prepared in the same manner as Example 1 above, except that in Example 1 above, the content of the first dispersant is set to 2.600% by weight with respect to a total of 100 parts by weight of the carbon nanotube dispersion, and the content of the second dispersant is set to 2.600% by weight with respect to a total of 100 parts by weight of the carbon nanotube dispersion.

### Experimental Example

The viscosity of the carbon nanotube dispersion of Examples 1 to 7 and Comparative Examples 1 to 10 was measured, and the viscosity was measured again after leaving them at 25 °C for one week, and the results are shown in Table 2 below.

The viscosity was measured at 25 °C and 1 rpm using a viscometer (viscometer TV-25, Rotor Code 01, manufactured by TOKI SANGYO company).

**[Table 2]**

| | CNT content (% by weight) | First dispersant | | Second dispersant | | Viscosity | | |
|---|---|---|---|---|---|---|---|---|
| | | Type | Content (% by weight) | Type | Content (% by weight) | After dispersion (Pa ·s ) | After 1 week (Pa ·s ) | Increase rate (%) |
| Example 1 | 1 | PVP | 1.125 | luteolin | 0.375 | 8.5 | 8.7 | 2.4 |
| Example 2 | 1 | PVP | 1.000 | luteolin | 0.500 | 9.8 | 10.4 | 6.1 |
| Example 3 | 0.6 | PVP | 0.675 | luteolin | 0.225 | 2.5 | 2.55 | 2.0 |
| Example 4 | 1 | PVP | 1.125 | luteolin | 0.113 | 9.9 | 11.3 | 14.1 |
| Example 5 | 1 | PVP | 2.500 | luteolin | 2.250 | 9.7 | 10.1 | 4.1 |
| Example 6 | 1 | PVP | 1.125 | quercetin | 0.375 | 8.9 | 10.1 | 13.4 |
| Example 7 | 1 | PVP | 1.125 | myricetin | 0.375 | 9.3 | 10.2 | 9.7 |
| Comparative Example 1 | 1 | PVP | 1.125 | - | - | 24.0 | 30.0 | 25.0 |
| Comparative Example 2 | 0.6 | PVP | 0.900 | - | - | 12.0 | 14. 6 | 21. 7 |
| Comparative Example 3 | 1 | - | - | luteolin | 1.500 | viscosity cannot be measured | viscosity cannot be measured | viscosity cannot be measured |
| Comparative Example 4 | 0.6 | PVP | 0.675 | Tristyrylphenol ethoxylate | 0.225 | 18.4 | 24.5 | 33.2 |
| Comparative Example 5 | 0.6 | PVP | 0.675 | styrene maleic acid copolymer | 0.225 | 9.7 | 17.0 | 75.3 |
| Comparative Example 6 | 1 | PVP | 1.125 | tannic acid | 0.375 | 13.2 | 15.6 | 18.2 |
| Comparative Example 7 | 1 | PVP | 1.125 | Epigallocatechi n gallate | 0.375 | 15.1 | 18.3 | 21.2 |
| Comparative Example 8 | 1 | PVP | 0.250 | luteolin | 0.025 | viscosity cannot be measured | viscosity cannot be measured | viscosity cannot be measured |
| Comparative Example 9 | 1 | PVP | 3.056 | luteolin | 2.750 | 19.9 | 27.7 | 39.3 |
| Comparative Example 10 | 1 | PVP | 2.600 | luteolin | 2.600 | 18.1 | 23.4 | 29.2 |

| | | | | | | | | |
|---|---|---|---|---|---|---|---|---|
| (* CNT, the contents of the first dispersant and the second dispersant are based on at total of 100% by weight of the carbon nanotube dispersion) | | | | | | | | |

Referring to Table 2 above, it can be seen that compared to the carbon nanotube dispersion of Comparative Example 1, which contains only polyvinylpyrrolidone as the first dispersant, the carbon nanotube dispersions of Examples 1 to 7, which contains the first dispersant and the second dispersant comprising a substituted benzopyran-based compound containing at least 3 or more hydroxy groups in a specific amount, have a low initial viscosity immediately after dispersing the carbon nanotubes in an aqueous solvent, and in particular, the increase in viscosity of the carbon nanotube dispersions over time is very effectively suppressed.

In the case of the carbon nanotube dispersion in Comparative Example 2, it can be seen that since the content of carbon nanotubes was reduced compared to the carbon nanotube dispersion in Comparative Example 1, the initial viscosity immediately after dispersing the carbon nanotubes in the aqueous solvent was reduced compared to the carbon nanotube dispersion in Comparative Example 1, but as with the carbon nanotube dispersion of Comparative Example 1, since it does not contain the second dispersant comprising a substituted benzopyran-based compound containing at least 3 or more hydroxy groups as compared to Example 1 to 3, the effect of suppressing the increase in viscosity of dispersion due to changes over time is not observed.

In the case of the carbon nanotube dispersion in Comparative Example 3, since the first dispersant was not contained as compared to the carbon nanotube dispersion in Example 1 to 3, the carbon nanotubes could not be completely dispersed in an aqueous solvent, and agglomeration of dispersion occurred, making viscosity measurement impossible.

In the case of the carbon nanotube dispersions in Comparative Examples 4 and 5, it can be seen that since the material comprising a substituted benzopyran-based compound containing at least 3 or more hydroxy groups is not used as compared to the carbon nanotube dispersion in Example 1 to 3, the initial viscosity immediately after dispersing the carbon nanotube in an aqueous solution is high (Comparative Example 4), the effect of suppressing the increase in viscosity of dispersion due to changes over time is not observed (Comparative Example 4 and 5).

In the case of the carbon nanotube dispersions in Comparative Examples 6 and 7, it can be seen that since the compounds used as the second dispersant contain more than six hydroxy groups as compared to the carbon nanotube dispersion in Example 1 to 3, excessive hydrogen bonding with the first dispersant and a solvent occurs due to the excessive hydroxyl group, and as a result, the formation of hydrogel is intensified, and the initial viscosity immediately after dispersing the carbon nanotube is high, and the effect of suppressing the increase in viscosity of dispersion due to changes over time is not observed.

In the case of the carbon nanotube dispersion in Comparative Example 8, since the second dispersant was contained below a certain content range as compared to the carbon nanotube dispersion in Example 1 to 3, the carbon nanotubes could not be completely dispersed in an aqueous solvent, and agglomeration of dispersion occurred, making viscosity measurement impossible.

In the case of the carbon nanotube dispersion in Comparative Example 9, it can be seen that since the second dispersant is excessively contained as compared to the carbon nanotube dispersion in Example 1 to 3, the initial viscosity immediately after dispersing the carbon nanotube in an aqueous solution is high, and the effect of suppressing the increase in viscosity of dispersion due to changes over time is not observed.

In the case of the carbon nanotube dispersion in Comparative Example 10, it can be seen that since the contents of the first dispersant and the second dispersant do not meet a certain ratio as compared to the carbon nanotube dispersion in Example 1 to 3, the initial viscosity immediately after dispersing the carbon nanotube in an aqueous solution is high, and the effect of suppressing the increase in viscosity of dispersion due to changes over time is not observed.

Therefore, it was confirmed that only when a carbon nanotube dispersion obtained by dispersing carbon nanotubes in an aqueous solvent contains a first dispersant containing a nitrogen atom and a second dispersant in a certain weight ratio and the second dispersant comprises a substituted benzopyran-based compound containing at least 3 or more hydroxy groups, the carbon nanotube dispersion exhibits low viscosity, and the increase in viscosity due to changes over time can be suppressed.

Although the preferred embodiments of the present invention have been described in detail above, the scope of rights of the present invention is not limited thereto, and various modifications and improvements made by those skilled in the art using the basic concept of the present invention defined in the following claims also fall within the scope of rights of the present invention.

## Claims

1. A carbon nanotube dispersion, comprising:
carbon nanotubes;
a first dispersant containing a nitrogen atom;
a second dispersant containing a substituted benzopyran-based compound; and
a solvent,
wherein the substituted benzopyran-based compound contained in the second dispersant contains at least three hydroxy groups.

2. The carbon nanotube dispersion according to claim 1, wherein the second dispersant contains a compound represented by Formula 1 below: 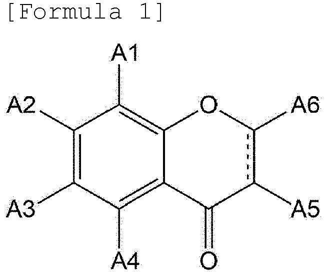 in Formula 1 above,
-̅-̅-̅-̅-̅-̅ is a single or double bond;
A1 to A6 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; a substituted or unsubstituted C2 to C10 heterocycloalkyl group; or a substituent represented by Formula 2 below, wherein at least one of A1 to A6 is represented by Formula 2 below, 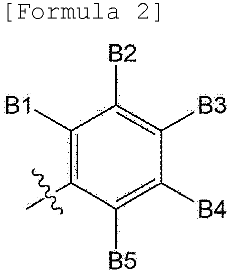 in Formula 2 above,
B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; substituted or unsubstituted C1 to C10 alkoxy group; a substituted or unsubstituted C3 to C10 cycloalkyl group; or a substituted or unsubstituted C2 to C10 heterocycloalkyl group,
wherein at least three of the substituents not represented by Formula 2 among A1 to A6 in Formula 1 and B1 to B5 in Formula 2 are hydroxy groups.

3. The carbon nanotube dispersion according to claim 1, wherein the second dispersant comprises a compound represented by any one of Formulas 3 to 5 below: 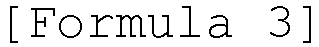 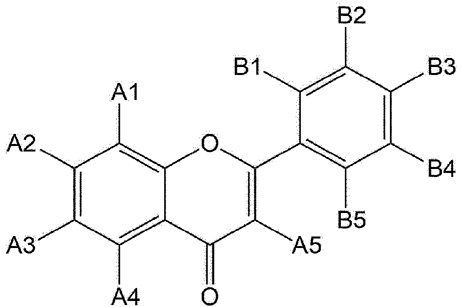 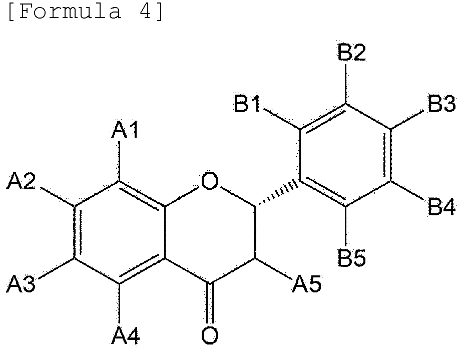 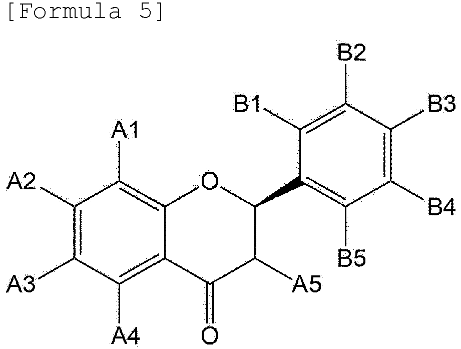 in Formulas 3 to 5 above,
A1 to A5 and B1 to B5 are the same or different from each other and are each independently hydrogen; deuterium; halogen; a cyano group; a hydroxyl group; a carboxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C3 to C10 cycloalkyl group; or a substituted or unsubstituted C2 to C10 heterocycloalkyl group,
wherein at least three of A1 to A5 and B1 to B5 in Formulas 3 to 5 are hydroxy groups.

4. The carbon nanotube dispersion according to claim 1, wherein the second dispersant is at least one selected from the group consisting of luteolin, quercetin, kaempferol, myricetin, fisetin, morin, hesperetin, naringenin and eriodictyol.

5. The carbon nanotube dispersion according to claim 1, wherein the BET specific surface area of the carbon nanotubes is 800 to 2,000 m²/g.

6. The carbon nanotube dispersion according to claim 1, wherein the carbon nanotube dispersion contains the first dispersant in an amount of 25 parts by weight to 450 parts by weight, based on 100 parts by weight of the carbon nanotube.

7. The carbon nanotube dispersion according to claim 1, wherein the carbon nanotube dispersion contains the second dispersant in an amount of 5 parts by weight to 250 parts by weight, based on 100 parts by weight of the carbon nanotube.

8. The carbon nanotube dispersion according to claim 1, wherein the first dispersant is at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

9. The carbon nanotube dispersion according to claim 1, wherein the first dispersant and the second dispersant are contained in a weight ratio of 100:10 to 100:90.

10. The carbon nanotube dispersion according to claim 1, wherein the carbon nanotube dispersion has an initial viscosity of 1 to 10 Pa·s as measured at 25 °C and 1 rpm.

11. The carbon nanotube dispersion according to claim 1, wherein the carbon nanotube dispersion has a viscosity increase rate of 15% or less as represented by Equation 1 below: Viscosity increase rate (%) = {(viscosity measured after leaving at 25°C for 1 week - initial viscosity)/initial viscosity} × 100.

12. A method for preparing the carbon nanotube dispersion according to claim 1, comprising:
(1) mixing carbon nanotubes, a first dispersant containing a nitrogen atom, a second dispersant comprising a substituted benzopyran-based compound containing at least three hydroxy groups and a solvent to prepare a primary dispersion of carbon nanotubes; and
(2) dispersing the primary dispersion of carbon nanotubes to prepare a secondary dispersion of carbon nanotubes.

13. An electrode slurry composition for a lithium secondary battery comprising the carbon nanotube dispersion according to claim 1 and an electrode active material.
